# FASCICULE DE BREVET EUROPEEN

(11) **EP 1 243 491 B1**
(45) Date de publication et mention de la délivrance du brevet: **17.09.2008**
(21) Numéro de dépôt: 02290663.0
(22) Date de dépôt: 15.03.2002
(51) Int. Cl.: B60T 7/06

(54) **Dispositif de montage d'une pédale dans un véhicule**
Vorrichtung für die Montage eines Fahrzeugpedals
Device for mounting an automotive vehicle pedal

(30) Priorité: 19.03.2001 FR 0103661
(43) Date de publication de la demande: 25.09.2002
(73) Titulaire: RENAULT S.A.S., 92100 Boulogne Billancourt (FR)
(72) Inventeur: Mencarelli, Franck, 78180 Montigny le Bretonneux (FR)

(56) Documents cités:
- EP-A- 0 659 615
- EP-A- 0 805 079
- DE-A- 4 409 235

## Description

La présente invention concerne un dispositif de montage d'une pédale dans un véhicule automobile, s'agissant plus particulièrement de la pédale de frein.

La présente invention concerne plus précisément une amélioration apportée à un dispositif existant, décrit et revendiqué dans la demande de brevet EP 0965506 au nom de la présente demanderesse, à laquelle on pourra donc se référer.

Le document EP 0 659 615 décrit un dispositif de montage d'une pédale conventionelle.

Ce dispositif a été conçu pour éviter ou réduire les lésions dans la cheville de la jambe d'appui du conducteur au cas où un choc frontal ou dirigé vers l'arrière provoque un recul dans l'habitacle du tablier avant du véhicule. Il comprend un support de pédale monté sur le tablier du véhicule et portant un axe principal de rotation de la pédale, et des moyens de cisaillage coopérant avec une partie fixe du véhicule pour sectionner ledit axe principal en cas de recul dudit support, de façon à en libérer la pédale.

Dans la pratique, le support de pédale est généralement une chape portant les deux extrémités dudit axe principal de rotation de la pédale, les moyens de cisaillage étant doublés pour agir simultanément des deux côtés. Et bien que l'efficacité de ces derniers soit avérée, il arrive malheureusement quelquefois que l'axe, bien que totalement sectionné totalement des deux côtés, se coince avec les lames de cisaillage entre les flasques de la chape, de sorte que l'effet de libération souhaité de la pédale est malencontreusement différé ou pire, n'est pas obtenu.

La présente invention résulte de la recherche d'une solution simple pour supprimer cet inconvénient.

Elle consiste en ce que, dans un dispositif de montage d'une pédale, notamment d'une pédale de frein, d'un véhicule automobile, comprenant un support dans lequel est montée la pédale par l'intermédiaire d'un axe de rotation porté de chaque côté dans ledit support, ainsi que des moyens de cisaillage agencés pour être actionnés par un élément d'appui solidaire d'une partie sensiblement fixe du véhicule et destinés à cisailler ledit axe de rotation de chaque côté de la pédale en cas de recul dans l'habitacle dudit support lors d'un choc frontal ou dirigé vers l'arrière afin de libérer la pédale dudit support,
sont en outre associés auxdits moyens de cisaillage des moyens de libération pour chasser positivement à l'extérieur dudit support ladite pédale avec son axe de rotation immédiatement après que celui-ci a été sectionné par lesdits moyens de cisaillage.

Dans une forme de réalisation préférée de l'invention, lesdits moyens de cisaillage sont constitués de deux mêmes couteaux rotatifs arrangés pour agir simultanément de chaque côté de la pédale, et lesdits moyens de libération consistent sur au moins l'un des couteaux en un élément de butée solidaire de celui-ci, et placé et conformé de manière à venir en contact avec la tête de pédale en fin de cisaillage dudit axe principal, et à pousser ensuite sur celui-ci vers l'arrière du véhicule et vers le bas par rapport audit support, de par la rotation continuée desdits couteaux.

Ces caractéristiques et avantages de l'invention, ainsi que d'autres, apparaîtront plus clairement à la lecture de la description suivante d'un exemple de réalisation, faite en relation avec les dessins joints, dans lesquels :
la Fig. 1 est une vue schématique de côté représentant un dispositif de montage de pédale de frein selon l'invention dans une forme de réalisation préférée tel qu'il se présente à l'état normal, autrement dit avant un choc ; et
les Figs. 2 à 4 sont des mêmes vues schématiques que la Fig. 1 représentant le dispositif dans des positions successives au cours d'un recul vers l'arrière du support de pédale sous l'effet d'un choc.

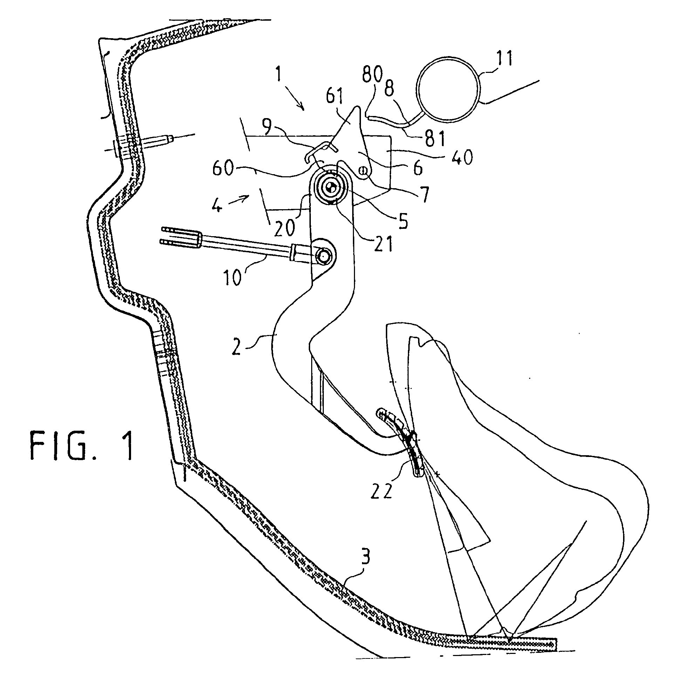

Considérant d'abord la Fig. 1, elle représente un dispositif de montage 1 d'une pédale de frein 2 placé en saillie sur le tablier avant 3 de l'habitacle d'un véhicule.

Le dispositif 1 comprend classiquement un support de pédale sous la forme d'une chape 4 dont seulement un flasque 40 apparaît partiellement en traits fins sur les dessins, qui est fixée de façon classique sur le tablier 3.

La pédale 2 comprend dans sa partie supérieure ou tête de pédale 20, un moyeu 21 par lequel elle est articulée sur un axe de rotation transversal 5 porté de chaque côté dans la chape 4. En un point intermédiaire entre son moyeu 21 et son patin inférieur 22, la pédale 2 est d'autre part articulée à un levier 10 d'actionnement d'un organe de freinage non représenté.

Le dispositif 1 comprend d'autre part un ensemble de cisaillage constitué de deux couteaux identiques 6 disposés de part et d'autre du moyeu de pédale 21, à l'intérieur des flasques 40. Les couteaux 6 sont rotatifs autour d'un même axe transversal 7 également monté dans la chape 4, en arrière de l'axe de pédale 5.

Les couteaux 6 comportent une lame 60 avec un bord tranchant en regard de l'axe de pédale 5, et une partie supérieure 61 saillant au-dessus du flasque 40 adjacent, laquelle partie supérieure 61 est conformée pour coopérer, afin d'actionner les couteaux en les faisant tourner autour de leur axe 7, avec un élément d'appui 8 solidaire d'une partie fixe ou sensiblement fixe du véhicule, telle que la traverse du poste de conduite représentée et désignée par la référence 11 sur les dessins.

Dans l'exemple de réalisation représenté, l'élément d'appui 8 comporte une extrémité avant 80 formant butée pour la partie supérieure 61 des couteaux 6, suivie par une paroi constituant une came ou surface de guidage 81 sur laquelle la partie supérieure 61 glisse ensuite, après qu'elle a échappé sous l'extrémité 80.

Selon l'invention, au moins un des couteaux 6, et de préférence chacun des deux, comporte en outre un moyen pour chasser positivement hors de sa position de montage, afin de la libérer de tout coincement dans la chape 4, la tête de pédale 20, immédiatement après qu'il aura sectionné l'axe 5, et en continuant de tourner autour de son axe 7. Ce moyen est un élément 9 formant saillie latéralement sur le couteau 6, sur la partie arrière de sa lame 60.

De préférence, l'élément 9 a un profil concave vers la tête de pédale 20, de manière à venir au contact de celle-ci par ses deux extrémités haute et basse en deux points respectivement dans la zone du sommet de la tête de pédale 20 et sur le côté avant de celle-ci. Ainsi, lorsque le couteau 6 est actionné, l'élément 9 exerce sa poussée sur la tête de pédale 20 de façon positive tant vers le bas que vers l'arrière du véhicule. En pratique, l'élément 9 peut être avantageusement un tronçon de profilé transversal joint par chacune de ses extrémités à un couteau respectif 6.

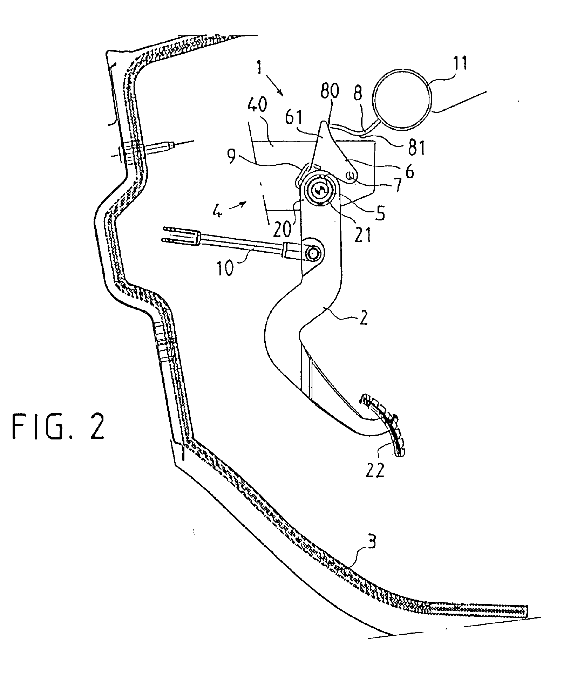

La Fig. 2 représente la phase de cisaillage de l'axe 5 par les couteaux 6 lors d'un choc.

L'ensemble du tablier 3 et du dispositif de montage de pédale 1 est en cours de recul par rapport à l'élément fixe 8 qui agit donc en poussée par son extrémité 80 contre la partie supérieure 61 des couteaux 6, en entraînant par conséquent ceux-ci en rotation avec la vitesse et la force nécessaires pour que le sectionnement de l'axe 5 soit assuré de chaque côté de la pédale. La phase de cisaillage se termine sensiblement en même temps que la partie supérieure 61 des couteaux 6 échappe à l'extrémité 80 de l'élément fixe 8 pour continuer son déplacement en glissement sous la surface de guidage 81.

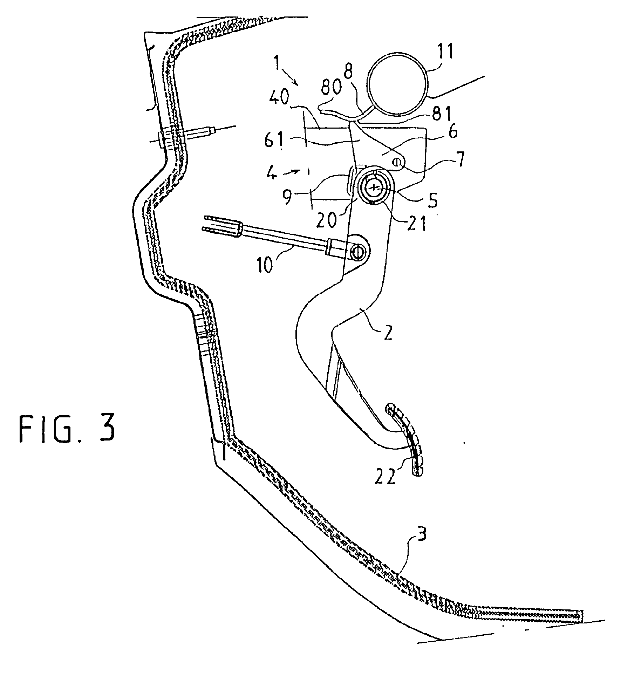

Sensiblement au même moment, l'élément 9 des couteaux 6 arrive en appui sur la tête de pédale 20 en deux points sur le sommet et sur l'avant de celle-ci, comme expliqué plus haut. A partir de ce moment, la continuation du mouvement de rotation des couteaux 6, assurée par le glissement de leur partie supérieure 61 sous l'élément 8, chasse dans la chape 4, vers le bas et vers l'arrière, la tête de pédale 20, comme l'illustre la Fig. 3. La pédale 2 étant d'autre part toujours articulée au levier 10, ce déplacement de la tête de pédale 20 par rapport à la chape 4 a tendance déjà à ramener le patin de pédale 22 vers le tablier 3.

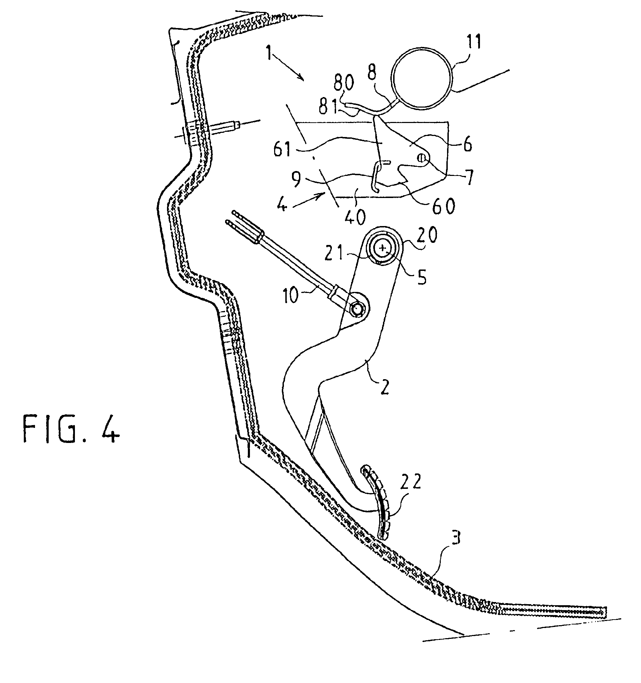

Enfin, comme illustré à la Fig. 4, la tête de pédale 20 se trouvant totalement dégagée de la chape 4, la pédale 2 peut tomber librement au plancher puisqu'elle n'est plus retenue que par le levier 10.

## Revendications

1. Dispositif de montage d'une pédale, notamment d'une pédale de frein, d'un véhicule automobile, comprenant un support (4) dans lequel est montée la pédale (2) par l'intermédiaire d'un axe de rotation (5) porté de chaque côté dans ledit support (4), ainsi que des moyens de cisaillage agencés pour être actionnés par un élément d'appui (8) solidaire d'une partie sensiblement fixe (11) du véhicule et destinés à cisailler ledit axe de rotation (5) de chaque côté de la pédale (2) en cas de recul dans l'habitacle dudit support (4) lors d'un choc frontal ou dirigé vers l'arrière afin de libérer la pédale (2) dudit support (4),
**caractérisé en ce que** sont en outre associés auxdits moyens de cisaillage des moyens de libération pour chasser positivement à l'extérieur dudit support (4) ladite pédale (2) avec son axe de rotation (5) immédiatement après que celui-ci a été sectionné par lesdits moyens de cisaillage.

2. Dispositif selon la revendication 1, **caractérisé en ce que** lesdits moyens de cisaillage sont constitués de deux mêmes couteaux rotatifs (6) arrangés pour agir simultanément de chaque côté de la pédale (2), et **en ce que** lesdits moyens de libération consistent sur au moins l'un des couteaux en un élément de butée (9) solidaire de celui-ci, et placé et conformé de manière à venir en contact avec la tête de pédale (20) en fin de cisaillage dudit axe de rotation de pédale (5), et à pousser ensuite sur celle-ci vers l'arrière du véhicule et vers le bas par rapport audit support (4), de par la rotation continuée desdits couteaux (6).

3. Dispositif selon la revendication 2, **caractérisé en ce que** ledit élément de butée (9) fait saillie latéralement sur son couteau (6), sur la partie arrière de la lame (60) de celui-ci.

4. Dispositif selon la revendication 3, **caractérisé en ce que** ledit élément de butée (9) a un profil concave vers la tête de pédale (20), de manière à venir au contact de celle-ci par ses deux extrémités haute et basse en deux points respectivement dans la zone du sommet de la tête de pédale (20) et sur le côté avant de celle-ci.

5. Dispositif selon l'une des revendications 2 à 4, **caractérisé en ce que** ledit élément de butée (9) est un tronçon de profilé transversal joint par chacune de ses extrémités à un couteau respectif (6).

## Claims

1. Device for mounting a motor vehicle pedal, in particular a brake pedal, comprising a support (4) in which the pedal (2) is mounted by way of a rotary pin (5) held on each side in said support (4), and also shearing means designed to be actuated by a bearing element (8) which is secured to an essentially fixed part (11) of the vehicle and is intended to shear off said rotary pin (5) on each side of the pedal (2) in the event of said support (4) moving backwards into the passenger compartment during a frontal impact, or is directed towards the rear in order to release the pedal (2) from said support (4), **characterized in that** release means, for positively diverting said pedal (2) together with its rotary pin (5) to the outside of said support (4) immediately after said rotary pin has been cut by said shearing means, are furthermore connected with said shearing means.

2. Device according to Claim 1, **characterized in that** said shearing means consist of two identical rotary cutters (6) arranged so as to act simultaneously on each side of the pedal (2), and **in that** said release means consist, on at least one of the cutters, of an abutment element (9) secured to the latter and positioned and shaped so as to come into contact with the pedal head (20) at the end of the shearing of said pedal rotary pin (5), and then to push the latter towards the rear of the vehicle and downwards with respect to said support (4) through the continued rotation of said cutters (6).

3. Device according to Claim 2, **characterized in that** said abutment element (9) projects to the side of its cutter (6), on the rear blade (60) thereof.

4. Device according to Claim 3, **characterized in that** said abutment element (9) has a concave profile in the direction of the pedal head (20) so as to come into contact with the latter via its two, upper and lower, ends at two points respectively in the area of the top of the pedal head (20) and on the front side of the latter.

5. Device according to one of Claims 2 to 4, **characterized in that** said abutment element (9) is a transverse section joined by each of its ends to a respective cutter (6).

## Patentansprüche

1. Vorrichtung zum Montieren eines Pedals, insbesondere eines Bremspedals, eines Kraftfahrzeugs, mit einem Träger (4), in dem das Pedal (2) über eine Drehwelle (5) angebracht ist, die auf beiden Seiten in dem Träger (4) unterstützt ist, und Abscherungsmitteln, die dazu ausgelegt sind, durch ein Abstützelement (8) betätigt zu werden, das mit einem im Wesentlichen festen Teil (11) des Fahrzeugs fest verbunden ist, und die dazu bestimmt sind, im Fall eines Zurückspringens des Trägers (4) in den Fahrgastraum bei einem Frontalzusammenstoß die Drehwelle (5) beiderseits des Pedals (2) abzuscheren, oder nach hinten gelenkt zu werden, um das Pedal (2) von dem Träger (4) freizugeben,
**dadurch gekennzeichnet, dass** den Abscherungsmitteln außerdem Freigabemittel zugeordnet sind, um direkt nach dem Durchteilen der Drehwelle mittels der Abscherungsmittel das Pedal (2) zusammen mit seiner Drehwelle (5) effektiv aus dem Träger (4) zu stoßen.

2. Vorrichtung nach Anspruch 1, **dadurch gekennzeichnet, dass** die Abscherungsmittel aus zwei rotierenden Messern (6) gebildet sind, die angeordnet sind, um gleichzeitig beiderseits des Pedals (2) zu wirken, und dass die Freigabemittel an wenigstens einem der Messer aus einem Anschlagelement (9) bestehen, das mit diesem fest verbunden ist und in der Weise angeordnet und ausgebildet ist, dass es am Ende des Abscherens der Pedal-Drehwelle (5) mit dem Pedalkopf (20) in Kontakt gelangt und anschließend während der fortgesetzten Drehung der Messer (6) diese Pedal-Drehwelle (5) in den hinteren Bereich des Fahrzeugs und in Bezug auf den Träger (4) nach unten schiebt.

3. Vorrichtung nach Anspruch 2, **dadurch gekennzeichnet, dass** das Anschlagelement (9) an seinem zugeordneten Messer (6) an einem hinteren Teil seiner Klinge (60) seitlich vorsteht.

4. Vorrichtung nach Anspruch 3, **dadurch gekennzeichnet, dass** das Anschlagelement (9) ein zum Pedalkopf (20) konkaves Profil hat, derart, dass es mit seinem hohen und seinem niedrigen Ende mit diesem an zwei Punkten, in der Scheitelzone des Pedalkopfes (20) bzw. an dessen Vorderseite, in Kontakt gelangt.

5. Vorrichtung nach einem der Ansprüche 2 bis 4, **dadurch gekennzeichnet, dass** das Anschlagelement (9) ein transversales profiliertes Teilstück ist, das mit jedem seiner Enden mit einem entsprechenden Messer (6) verbunden ist.
